# EUROPÄISCHE PATENTSCHRIFT

(11) **EP 3 061 038 B1**
(45) Veröffentlichungstag und Bekanntmachung des Hinweises auf die Patenterteilung: **15.05.2019**
(21) Anmeldenummer: 14744806.2
(22) Anmeldetag: 23.07.2014
(51) Int. Cl.: G06K 19/06

(54) **PRODUKT AUFWEISEND EINEN OPTOELEKTRONISCH LESBAREN CODE**
PRODUCT HAVING AN OPTOELECTRONICALLY READABLE CODE
PRODUIT COMPORTANT UN CODE LISIBLE OPTOÉLECTRONIQUEMENT

(30) Priorität: 24.10.2013 DE 102013221661; 19.11.2013 DE 102013223567
(43) Veröffentlichungstag der Anmeldung: 31.08.2016
(60) Teilanmeldung: 17197665.7
(73) Patentinhaber: Continental Reifen Deutschland GmbH, 30165 Hannover (DE)
(72) Erfinder: BOGENSCHÜTZ, Peter, 30900 Wedemark (DE); HÜBNER, Felix, 31275 Lehrte OT Arpke (DE); METZ, Markus, 31535 Neustadt/OT Bordenau (DE)
(74) Vertreter: Finger, Karsten
(86) Internationale Anmeldenummer: PCT/EP2014/065780
(87) Internationale Veröffentlichungsnummer: WO 2015/058872

(56) Entgegenhaltungen:
- US-A- 4 625 101
- US-A- 4 644 151
- US-A1- 2006 151 451

## Beschreibung

Die Erfindung betrifft eine Produktoberfläche aufweisend einen optoelektronisch lesbaren Code, welcher durch eine Anordnung flächiger Zellen unterschiedlicher Zellenarten gebildet ist, wobei die Zellen integraler Bestandteil der Produktoberfläche sind, wobei die Zellen einer jeden Zellenart jeweils ein Oberflächenprofil aufweisen, wobei das Oberflächenprofil mindestens einer Zellenart mindestens eine Erhebung und/oder Vertiefung relativ zur Produktoberfläche aufweist und wobei das Oberflächenprofil einer ersten Zellenart relativ zum Oberflächenprofil einer zweiten Zellenart so ausgebildet ist, dass sich die Reflexionseigenschaften des Oberflächenprofils der ersten Zellenart von den Reflexionseigenschaften des Oberflächenprofils der zweiten Zellenart unterscheiden. Weiter betrifft die Erfindung die Verwendung der Produktoberfläche sowie ein Verfahren zu deren Herstellung.

Mittels eines optoelektronisch lesbaren Codes kann auf einfache Art und Weise Information auf einem Produkt dargestellt werden. Beispiele hierfür sind eine durch einen Strichcode dargestellte Produktnummer oder eine mittels eines QR-Codes dargestellte Internetadresse (Uniform Resource Locator), die beispielsweise auf eine Internetseite des Produktherstellers verweist. Die Zellenarten solcher Codes müssen sich hierbei in ihrem optischen Kontrast ausreichend unterscheiden, so dass die Zellen von einem optoelektronischen Lesegerät erfasst und unterschieden werden können. Üblicherweise weist ein Code zwei Zellenarten auf, die sich in ihrer Farbe, beispielsweise über ihren Farbton und/oder ihre Farbsättigung und/oder ihren Hellwert, unterscheiden. Hieraus ergibt sich ein optischer Kontrast in der Helligkeit bzw. Intensität des von den Zellen der unterschiedlichen Zellenarten reflektierten Lichts, der mittels eines optoelektonischen Lesegerätes detektiert und zur Unterscheidung der Zellenarten genutzt werden kann. Aufgrund des hohen optischen Kontrastes ist hierbei die Kombination von schwarzen und weißen Zellen eine gängige Darstellung. Üblicherweise werden solche Codes während oder nach der Herstellung des Produktes in Form einer zusätzlichen farbigen Schicht auf die Produktoberfläche aufgebracht.

Unter einem "Code" wird hierbei die Abbildungen von Daten in Symbolen verstanden. Eine "Zelle" ist ein flächiger Bereich, der durch seine optische Erscheinung und/oder seine geometrische Form und/oder zusammen mit weiteren Zellen ein solches Symbol repräsentiert. Zwei Zellen einer Zellenart weisen eine ähnliche optische Erscheinung und/oder geometrische Form auf. Zwei Zellen unterschiedlicher Zellenart unterscheiden sich signifikant in ihrer optischen Erscheinung und/oder ihrer geometrischen Form. Ein "optoelektronisch lesbarer" Code kann durch ein optoelektronisches Lesegerät erfasst und mittels entsprechender Software decodiert und interpretiert werden.

Aus der CA 2311960 C ist ein Fahrzeugluftreifen sowie ein Verfahren zu dessen Herstellung bekannt, der auf der Oberfläche der Reifenseitenwand eine Vulkanette mit einem Strichcode aus Tinte bzw. Druckerschwärze aufweist. Während der Herstellung des Fahrzeugluftreifens wird die Vulkanette auf die Oberfläche des unvulkanisierten Fahrzeugluftreifens aufgebracht und gemeinsam mit diesem vulkanisiert.

Der Einsatz einer Schicht aus anderen Materialien und/oder Farben als das Material und/oder die Farbe der Produktoberfläche auf der Produktoberfläche kann sich negativ auf den Gesamteindruck des Produktes beim Betrachter auswirken. Zudem ist die Lesbarkeit eines solchen Codes z.B. durch die Beanspruchung der anderen Materialien und/oder Farben bei der Herstellung und/oder dem Gebrauch des Produktes begrenzt. Dies kann durch Dehnung oder Wärmeeinwirkung bei der Herstellung oder durch Verfärbung durch Sonneneinstrahlung oder durch Ablösung der Schicht bei mechanischer Belastung beim Gebrauch des Produktes erfolgen. Gerade bei großen Herstellungszahlen ist es zudem aufwändig und teuer, jedes einzelne Produkt mit einer zusätzlichen Schicht zu versehen. Daher ist man bestrebt, den Code kostengünstiger und auf einfache Art und Weise auf der Produktoberfläche anbringen zu können. US-A-4625101 offenbart die Merkmale des Oberbegriffs von Anspruch 1.

Die Erfindung ist Gegenstand der unabhängigen Ansprüche.

Es ist Aufgabe der Erfindung, eine Produktoberfläche zur Verfügung zu stellen, die einen Code aufweist, der optoelektronisch lesbar ist, dessen Lesbarkeit robust gegenüber Beanspruchung bei der Herstellung und/oder dem Gebrauch der Produktoberfläche ist und der kostengünstig ist. Weiter ist es Aufgabe der Erfindung, ein Verfahren zu Verfügung zu stellen, mittels dessen eine solche Produktoberfläche auf einfache Art und Weise hergestellt werden kann.

Die Aufgabe bezüglich der Produktoberfläche wird gelöst, indem sich die Oberflächenprofile der Zellenarten eines Codes in ihrer Rautiefe unterscheiden, insbesondere indem das Verhältnis der Rautiefe des Oberflächenprofils einer ersten Zellenart zur Rautiefe des Oberflächenprofils einer zweiten Zellenart mindestens 20, insbesondere mindestens 30, beträgt. Die Reflexionseigenschaften solcher Oberflächenprofile unterscheiden sich ausreichend, um einen durch ein optoelektronisches Lesegerät lesbaren Code zur Verfügung zu stellen.

Die "Rautiefe" ist dabei gemäß DIN EN ISO 4287:1998 der arithmetischer Mittelwert der Einzelrautiefen aufeinanderfolgenden Einzelmessstrecken. Die Einzelrautiefe ist dabei die maximale Höhendifferenz innerhalb einer Einzelmessstrecke. Setzt sich das Oberflächenprofil weitgehend aus Elementen zusammen, so ist die Rautiefe das Maximum aus Rautiefe gemäß DIN EN ISO 4287:1998 und mittlerer Höhendifferenz der Elemente.

Bedeutend ist, dass sich die Zellenarten aufgrund der unterschiedlichen Reflexionseigenschaften ihrer Oberflächenprofile bei Lichteinfall in der Intensität des von den Oberflächenprofilen der Zellen der beiden Zellenarten reflektierten Lichtes unterscheiden.

Der Intensitätsunterschied wird somit nicht durch die unterschiedliche farbige Gestaltung und/oder durch unterschiedliche Materialien der Zellenoberflächen unterschiedlicher Zellenarten, sondern durch die unterschiedliche Gestaltung der Oberflächenprofile der Zellenarten erzeugt Das Oberflächenprofil der Zellen mindestens einer Zellenart weist hierbei Erhebungen und/oder Vertiefungen relativ zur Produktoberfläche auf, welche die Reflexionseigenschaften beeinflussen. Die Oberflächenprofile der Zellenarten sind so gestaltet, dass sich das Oberflächenprofil der einen Zellenart in seinen Reflexionseigenschaften von den Reflexionseigenschaften der Oberflächenprofile der anderen Zellenarten unterscheidet. Das Licht, das von den Zellen unterschiedlicher Zellenarten reflektiert wird, weist somit unterschiedliche Intensität auf. Der sich hierdurch ergebende Intensitätsunterschied kann von einem optoelektronischen Lesegerät erfasst werden. Somit können die Zellen unterschiedlicher Zellenarten unterschieden werden und der Code ist mittels eines optoelektronischen Lesegerätes lesbar.

Das "Oberflächenprofil" einer Zellenart bzw. das "Oberflächenprofil" der Zellen einer Zellenart charakterisiert die Erhebung(en) und/oder Vertiefung(en) der Oberfläche der Zellen der Zellenart. Das Oberflächenprofil umfasst die Dichte und/oder Höhe der Erhebungen und/oder Vertiefungen der Oberfläche und/oder die Orientierung der Oberfläche bzw. von Teilbereichen der Oberfläche.

Die "Reflexionseigenschaften" charakterisieren, wie Licht, das auf eine Oberfläche trifft, von dieser zurückgeworfen, d.h. reflektiert, wird. Die Reflexionseigenschaften werden vom Oberflächenprofil der Oberfläche und vom Oberflächenmaterial beeinflusst. Die Reflexionseigenschaften werden durch der fachkundigen Person bekannte Effekte wie Absorption und/oder Reflexion und/oder Verschattung beeinflusst. Die Reflexion erfolgt diffus und/oder gerichtet. Die Intensität des reflektierten Lichtes ist richtungsabhängig.

Oberflächenprofile, die sich in ihren Reflexionseigenschaften unterscheiden, unterscheiden sich in charakteristischen Merkmalen des von ihnen reflektierten Lichtes. Das von den Zellen einer Zellenart reflektierte Licht ist somit nicht zwingend in allen Merkmalen identisch sondern weist gleiche charakteristische Merkmale, d.h. die gleichen Reflexionseigenschaften auf, welche sich von den Reflexionseigenschaften der Zellen der anderen Zellenart unterscheiden. Dementsprechend werden die Erhebungen und/oder Vertiefungen unterschiedlicher Zellen einer Zellenart durch das Oberflächenprofil charakterisiert, sind aber nicht zwingend identisch.

Wie die fachkundige Person weiß, ist das von einer Oberfläche reflektierte Licht auch abhängig von Richtung, Intensität und Wellenlänge des eingestrahlten Lichtes. Im Zuge der Erfindung wird von einer ausreichenden Lichtquelle ausgegangen. Hierbei handelt es sich beispielsweise um eine in das optische Lesegerät integrierte aktive Lichtquelle oder um Umgebungslicht wie Sonnenlicht oder eine Raumbeleuchtung.

Das "optoelektronische Lesegerät" umfasst zumindest einen Detektor für Licht. Als optoelektromisches Lesegerät kann ein Lesegerät dienen, welches, wie beispielsweise ein Strichcodescanner, aktiv Licht aussendet und das in den Detektor zurückreflektierte Licht detektiert. Es kann sich auch um ein optoelektronisches Lesegerät handeln, das, wie beispielsweise ein mit einer Fotooptik und einer geeigneten Software ausgestattetes Smartphone, Licht detektiert, das aus der Umgebung von der Oberfläche des Codes in den Detektor reflektiert wird. Das optoelektronische Lesegerät erfasst mit einer Ortsauflösung von mindestens der minimalen Zellenabmessung die Intensität des von den einzelnen Zellen reflektierten Lichtes und ist sensitiv für den Intensitätsunterschied des von den Zellen unterschiedlicher Zellenarten reflektierten Lichtes. Die Zellen werden somit erfasst und unterschieden, wodurch der Code optoelektronisch gelesen werden kann. Eine externe oder eine in das optoelektronische Lesegerät integrierte Interpretationssoftware decodiert und interpretiert die mittels des Codes dargestellte. Information. Detektionsmechanismus und Interpretationssoftware können auf die Anforderungen des in die Produktoberfläche integrierten Codes abgestimmt sein.

Unter "Licht" ist elektromagnetische Strahlung zu verstehen, die sich zur Detektion durch ein optoelektronisches Lesegerät eignet. Insbesondere ist hierbei elektromagnetische Strahlung mit einer Wellenlänge von 380 nm bis 780 nm zu verstehen.

Die Zellen des Codes sind integraler Bestandteil der Produktoberfläche, d.h. sie sind als dreidimensionales Profil aus dem Material der Produktoberfläche bzw. des Produktes selbst gebildet. Das Material der Produktoberfläche ist auf die Beanspruchung bei der Herstellung und/oder der Benutzung des Produktes abgestimmt. Beispielsweise ist das elastomere Material der Oberfläche eines Fahrzeugluftreifens auf die starke Belastung durch hohe Temperaturen bei der Vulkanisation ausgerichtet. Somit ist keine generelle Einbuße der Lesbarkeit des Codes durch Beanspruchung bei der Herstellung und/oder dem Gebrauch der Produktoberfläche zu erwarten. Die Lesbarkeit des Codes ist robust gegenüber diesen Beanspruchungen und es sind keine zusätzlichen aufwändigen und kostenintensiven Maßnahmen zum Schutz der Lesbarkeit des Codes nötig.

Ein weiterer Vorteil der in die Polymeroberfläche integrierten Zellen des Codes sowie der Erzeugung des Intensitätsunterschiedes durch unterschiedliche Oberflächenprofile besteht darin, dass das aufwändige und kostenintensive Aufbringen einer oder mehreren zusätzlichen Schicht(en) aus Farbe und/oder anderen Materialien auf die Produktoberfläche entfällt. Zudem wird der Gesamteindruck des Produktes beim Betrachter nicht durch Farbe und/oder andere Materialien auf der Produktoberfläche beeinflusst.

Somit ist eine kostengünstige Produktoberfläche zur Verfügung gestellt, die einen optoelektronisch lesbaren Code aufweist, dessen Lesbarkeit robust gegenüber Beanspruchung bei der Herstellung und/oder dem Gebrauch der Produktoberfläche ist.

Es ist vorteilhaft, wenn der Code aus Zellen zweier Zellenarten gebildet ist. Ein solcher Code eignet sich hervorragend für die Darstellung binär codierter Information.

Vorteilhaft ist es, wenn das Oberflächenprofil der ersten Zellenart relativ zum Oberflächenprofil einer zweiten Zellenart Licht stärker absorbiert. Die beiden Zellen weisen dabei gleiche Abmessung auf. Es hat sich gezeigt, dass sich die Zellen zweier solcher Zellenarten sehr gut mittels eines geeigneten optoelektronischen Lesegerätes unterscheiden lassen.

Vorteilhaft ist es auch, wenn das Oberflächenprofil einer ersten Zellenart relativ zum Oberflächenprofil einer zweiten Zellenart weniger Licht in einen Detektionsraumwinkel von 0,0955 sr (Steradiant) reflektiert. Die beiden Zellen weisen dabei die gleiche Abmessung auf. 0,0955 sr entsprechen in etwa einem Raumwinkel, der von einem geraden Kreiskegel mit einem Öffnungswinkel von 20° aufgespannt wird. Der Detektor des optoelektronischen Lesegerätes kann auf einfache Art und Weise innerhalb eines solchen Raumwinkels positioniert werden. Hierdurch ist die zuverlässige und einfache Erfassung des Codes durch ein optoelektronisches Lesegerät optimal gewährleistet.

Besonders geeignet sind hierbei zwei Zellenarten mit Oberflächenprofilen, die eine unterschiedlich starke Absorption aufweisen und/oder mit Oberflächenprofilen, bei denen das Oberflächenprofil der ersten Zellenart bevorzugt diffus reflektiert und das Oberflächenprofil der zweiten bevorzugt in den Detektionsraumwinkel reflektiert und/oder mit Oberflächenprofilen, bei denen das Oberflächenprofil der zweiten Zellenart bevorzugt in den Detektionsraumwinkel reflektiert und das Oberflächenprofil der ersten Zellenart bevorzugt in einen hiervon verschiedenen Raumwinkel reflektiert.

Bevorzugt befindet sich der Detektionsraumwinkel innerhalb des Arbeitswinkels. Der Arbeitswinkel ist der von einem senkrecht zur Produktoberfläche positionierten Kreiskegel mit Öffnungswinkel von 120° aufgespannte Raumwinkel. Der Detektor des elektrooptischen Lesegerätes wird üblicherweise innerhalb des Arbeitswinkels positioniert, so dass ein Detektionsraumwinkel innerhalb des Arbeitswinkels ein zuverlässiges Lesen des Codes gewährleistet. Günstig ist es, wenn jeder Detektionsraumwinkel innerhalb des Arbeitswinkels obige Bedingung erfüllt.

Es ist vorteilhaft, wenn das Oberflächenprofil einer Zellenart Elemente aufweist, die eine Struktur und/oder eine Textur bilden. Die Höhe der Elemente kann regelmäßig oder unregelmäßig sein. Der Begriff "Struktur" umfasst die regelmäßige Anordnung von Elementen wie eine regelmäßige Schraffur, d.h. gerade und parallel zueinander angeordnete Stege, wie regelmäßige Raster aus Elementen oder wie Gitterstrukturen aus sich kreuzenden Stegen. Der Begriff "Textur" umfasst eine unregelmäßige aber weitgehend homogen erscheinende Verteilung von Elementen, insbesondere eine Verteilung von Höhe und/oder Anordnung der Elemente gemäß einer statistischen Verteilung oder eines Rauschens. Ein solches Oberflächenprofil ermöglicht eine gezielte Beeinflussung der charakteristischen Reflexionseigenschaften. Durch die gezielte Auswahl, Anordnung und Abmessung der Elemente der Struktur und/oder der Textur kann eine vorrangig gerichtete oder vorrangig diffuse Reflexion erreicht werden. Durch mehrmaliges Reflektieren des Lichtes an mehreren Elementen wird der Absorptionsgrad erhöht. Durch die gezielte Kombination von Zellenarten mit Oberflächenprofilen aufweisend eine unterschiedliche Struktur und/oder Textur kann der Unterschied in der reflektierten Intensität der Zellenarten gezielt erhöht und somit die optoelektronische Lesbarkeit eines Codes optimiert werden. Ein entsprechender Effekt wird erzielt, wenn Zellenarten kombiniert werden, bei denen eine erste Zellenart ein Oberflächenprofil mit einer Struktur und/oder Textur aufweist und eine zweite Zellenart ein Oberflächenprofil ohne eine Struktur oder Textur aufweist.

Vorteilhaft zur gezielten Beeinflussung der Reflexionseigenschaften erweisen sich Elemente, deren Form ein Stege und/oder ein Zylinder und/oder eine Pyramide und/oder ein Kegel und/oder ein Pyramidenstumpf und/oder ein Kegelstumpf zugrunde liegt. Beispielsweise werden durch die Ausrichtung der Längserstreckung von Stegen die Vorzugsrichtungen der Reflexion gezielt beeinflusst. Zylinderförmige, pyramidenförmige oder kegelförmige Elemente eignen sich hervorragend zur Erhöhung des Absorptionsgrades durch mehrmalige Reflektion des Lichtes an mehreren Elementen. Durch die Kombination einer ersten Zellenart mit einem solchen Oberflächenprofil mit einer zweiten Zellenart mit einem Oberflächenprofil, das einen geringeren Absorptionsgrad aufweist, kann ein hoher Intensitätsunterschied zwischen den Zellenarten erzielt werden. Ein solcher Code ist optoelektronisch lesbar. Zweckmäßig als Oberflächenprofil mit geringerem Absorptionsgrad ist ein Oberflächenprofil mit einer Rautiefe von maximal 0,01 mm.

Vorteilhaft ist es, wenn die Oberfläche der Elemente Erhebungen und/oder Vertiefungen, insbesondere eine Treppenstruktur, aufweist. Eine solche Struktur erhöht den Grad der Absorption und/oder der Diffusion.

Es ist vorteilhaft, wenn die Elementspitzen zweier benachbarter Elemente einen Abstand von 0,01 mm bis 0,8 mm, besonders bevorzugt einen Abstand von 0,06 mm bis 0,3 mm, aufweisen. Ein solcher Abstand eignet sich hervorragend zur Manipulation der Reflexionseigenschaften von Licht, ohne dass das einzelne Element für einen Betrachter auf der Produktoberfläche heraussticht.

Entsprechende Vorteile ergeben sich, wenn Elemente eines Oberflächenprofils einer Zellenart eine Höhendifferenz von 0,08 mm bis 0,5 mm, besonders bevorzugt eine Höhendifferenz von 0,15 mm bis 0,3 mm, aufweisen. Bevorzugt weisen alle Elemente eine solche Höhendifferenz auf. Die Höhendifferenz eines Elementes bemisst sich als Differenz der Höhe zwischen Elementgrund und Elementspitze. Vorteilhaft ist es auch, wenn das Oberflächenprofil einer Zellenart Bereiche mit einer Rautiefe von maximal 0,01 mm, bevorzugt einer Rautiefe von maximal 0,008 mm, aufweist. Ein solcher Bereich weist für Licht eine hohe Reflexionsrate und/oder charakteristische Reflexionseigenschaften auf. Insbesondere weist ein solches Oberflächenprofil einen hohen Reflexionsgrad auf. Zudem entspricht eine solche Rautiefe der üblichen produktionsbedingten Rautiefe vieler Produktoberflächen.

Weiter ist es vorteilhaft, wenn das Oberflächenprofil einer Zellenart einem Oberflächenprofil der Produktoberfläche entspricht. Besonders geeignet ist hierbei das Oberflächenprofil der Produktoberfläche mit der geringsten Rautiefe. Eine zusätzliche Bearbeitung bzw. Verformung der Produktoberfläche und/oder eines Werkzeuges zur Bearbeitung bzw. Verformung der Produktoberfläche ist somit für die Zellen dieser Zellenart nicht nötig.

Es ist zweckmäßig, wenn Zellen ein zusätzliches Höhenprofil aufweisen. Hierbei kann es sich um eine Neigung und/oder Krümmung der Zellenoberfläche und/oder um eine Absenkung oder Erhöhung der Zellenoberfläche relativ zur Produktoberfläche handeln. Durch eine Neigung und/oder Krümmung aller Zellenoberflächen einer Zellenart können deren Reflexionseigenschaften beeinflusst werden. Eine Neigung und/oder Krümmung von Zellenoberflächen kann auch eine Neigung und/oder Krümmung der Produktoberfläche ausgleichen, so dass die Lesbarkeit des Codes durch zueinander weitgehend parallele Zellenoberflächen erhöht ist. Eine Absenkung von Zellenobflächen, insbesondere wenn die maximale Höhe der Oberflächenprofile dem Niveau der Produktoberfläche entspricht oder diese unterschreitet, dient dem Schutz vor mechanischer Beanspruchung, wie Zerkratzen. Eine Absenkung bzw. Erhöhung von Zellenoberflächen kann durch die damit einhergehende Verschattung auch die Lesbarkeit des Codes erhöhen.

Zweckmäßig ist es, wenn der Code ein eindimensionaler Code, insbesondere ein Strichcode, oder ein zweidimensionaler Code, insbesondere ein quick-response-(QR-) Code, ist. Es eignet sich jede Codeart, die sich durch Zellen zumindest zweier Zellenarten in einer Fläche darstellen lässt. In einer bevorzugten Ausführungsform ist eine Zelle durch einen Kreis, eine Kreisscheibe, einen Strich, ein Rechteck oder ein Quadrat dargestellt. Bei den zweidimensionalen Codes sind insbesondere gestapelte Codes wie der Codablock, Code 49 und PDF417, sowie Matrix Codes wie QR-Codes, der DataMatrix Code, MaxiCode und Aztec-Code, sowie Punktcodes zu nennen. QR-Codes umfassen auch Weiterentwicklungen wie den Design-QR-Code, Micro-QR-Code, Secure-QR-Code und iQR-Code.

Es ist zweckmäßig, wenn der Code eine Grundfläche von 1 cm² bis 16 cm² auf der Produktoberfläche einnimmt. Die Erfindung eignet sich aber auch für Codes mit einer größeren oder kleineren Grundfläche.

Polymeres Material, insbesondere elastomeres Material, eignet sich hervorragend für eine erfindungsgemäße Produktoberfläche.

Vorteilhaft ist die Verwendung der Produktoberfläche auf der Seitenwand eines Fahrzeugluftreifens. Die Seitenwand ist bei der Herstellung und beim Gebrauch großer Beanspruchung ausgesetzt. Bei der Herstellung wird das elastomere Material im Vulkanisationsprozess einer hohen Temperatur ausgesetzt. Im Gebrauch ist beispielsweise ein Fahrzeugluftreifen starken Witterungsschwankungen ausgesetzt. Das elastomere Material ist auf diese Beanspruchungen hin abgestimmt. Die Lesbarkeit eines Code, der als integraler Bestandteil der Produktoberfläche aus diesem elastomeren Material selbst besteht, ist robust gegenüber diesen Beanspruchungen.

Die Verwendung der Produktoberfläche, insbesondere für die Seitenwand eines Fahrzeugluftreifens, ermöglicht es, gesetzliche Produktinformationen und/oder optionale Information, insbesondere eine Internetadresse, mittels des in die Produktoberfläche integrierten Codes darzustellen. Hierdurch ist eine kompakte Darstellung dieser Information geschaffen, die mittels eines optoelektronischen Lesegerätes gelesen werden kann. Die Internetadresse kann auf eine Internetseite verweisen, die weiterführende Information enthält, insbesondere Information über das Produkt und/oder den Hersteller und/oder eine Montage- und/oder Gebrauchsanleitung.

Ähnliche Vorteile ergeben sich bei der Verwendung der Produktoberfläche auf einem Förderband, z.B. an einer Stelle, die nicht permanent mit Schüttgut beaufschlagt ist.

Ein besonders geeignetes Verfahren zur Herstellung einer solchen Produktoberfläche besteht darin, dass zur Herstellung des Produktes ein Formwerkzeug eingesetzt wird und indem der Code bei der Herstellung des Produktes durch eine entsprechend ausgestaltete Formfläche des Formwerkzeuges formgebend in Produktoberfläche geprägt wird. Bei dem Formwerkzeug kann es sich um eine Walze handeln, die den Code in eine noch nicht ausgehärtete Oberfläche einprägt. Bei dem Herstellungsverfahren kann es sich auch um ein formgebendes Verfahren handeln, bei dem das Rohmaterial oder das Vorprodukt in ein Formwerkzeug gegeben wird und eine durch dieses Formwerkzeug bestimmte Produktform annimmt. Als formgebende Verfahren sind Gußverfahren, Spritzgußverfahren oder Vulkanisationsverfahren mittels einer Vulkanisationsform zu nennen. Der Code ist als Negativform in das Formwerkzeug eingebracht und wird im formgebenden Herstellungsschritt direkt in die Produktoberfläche eingeprägt. Es ist kein aufwändiger zusätzlicher Arbeitsschritt zur Aufbringung des Codes, etwa durch Aufbringung einer zusätzlichen Material- und/oder Farbschicht auf jedes einzelne Produkt nötig. Hierdurch kann ein auf seiner Oberfläche einen optoelektronisch lesbaren Code aufweisendes Produkt kostengünstiger und auf einfache Art und Weise hergestellt werden.

Es ist vorteilhaft, wenn das Formwerkzeug zur Herstellung des Produktes mit einer Aussparung versehen ist, in die ein der Aussparung komplementär ausgebildeter Wechselstempel auswechselbar anzuordnen ist, wobei der Wechselstempel eine Formfläche aufweist, durch welche der Code auf die Produktoberfläche übertragbar ist. Durch den Austausch des Wechselstempels können auf einfache Art und Weise Produktoberflächen zur Verfügung gestellt werden, die sich in ihrem eingeprägten Code unterscheiden. Die Formfläche des Wechselstempels ist vorzugsweise aus Stahl oder Silikon oder mit einem solchen Material beschichtet. Mit einem solchen Wechselstempel können sehr feine Strukturen in das Produkt eingeprägt werden.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 die Reflexion von Licht an einer Produktoberfläche;
Fig. 2 eine Draufsicht auf eine Produktoberfläche aufweisend einen QR-Code,
Fig. 3 eine Draufsicht auf eine Zelle eines Codes,
Fig. 4 einen Querschnitt durch zwei benachbarte Zellen unterschiedlicher Zellenart,
Fig. 5 einen Ausschnitt der Oberfläche eines Elementes,
Fig. 6 bis 9 jeweils eine Graustufendarstellung des Oberflächenprofils einer Zelle in der Draufsicht.

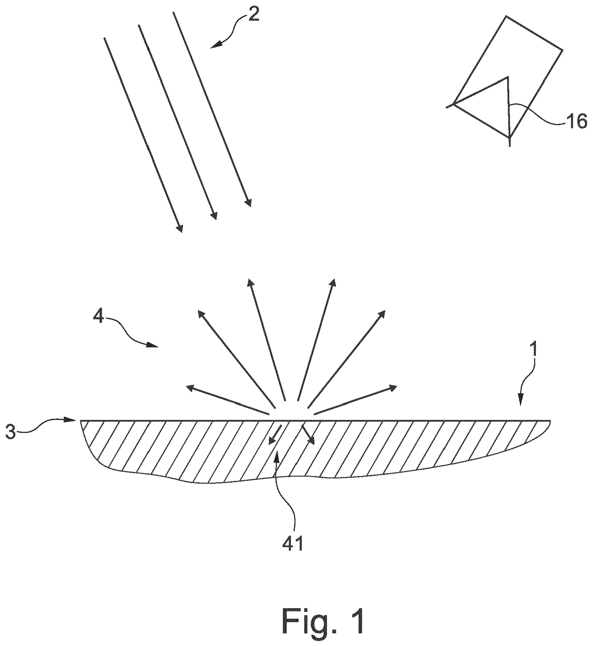

Die Figur 1 veranschaulicht die Reflexion von Licht an einer Produktoberfläche 1, welche im Querschnitt gezeigt ist. Einfallendes Licht 2 trifft auf die Produktoberfläche 1. Gemäß der Reflexionseigenschaften des nicht weiter dargestellten Oberflächenprofils 3 der Produktoberfläche 1 wird ein Teil des Lichtes 41 von der Produktoberfläche 1 absorbiert, anderer Teil des Lichtes 4 wird zurückgeworfen, d.h. reflektiert. Die Intensität des reflektierten Lichtes 4 ist richtungsabhängig und wird vom Oberflächenprofil 3 beeinflusst. Die Richtung und Intensität des einfallenden Lichtes 2, des absorbierten Lichtes 41 sowie des reflektierten Lichtes 4 ist durch die Richtung und Länge der Pfeile veranschaulicht. Ein Teil des reflektierten Lichtes 4 gelangt in einen Detektor 16 eines optoelektronischen Lesegerätes, welcher die Intensität des Lichtes ortsaufgelöst detektiert.

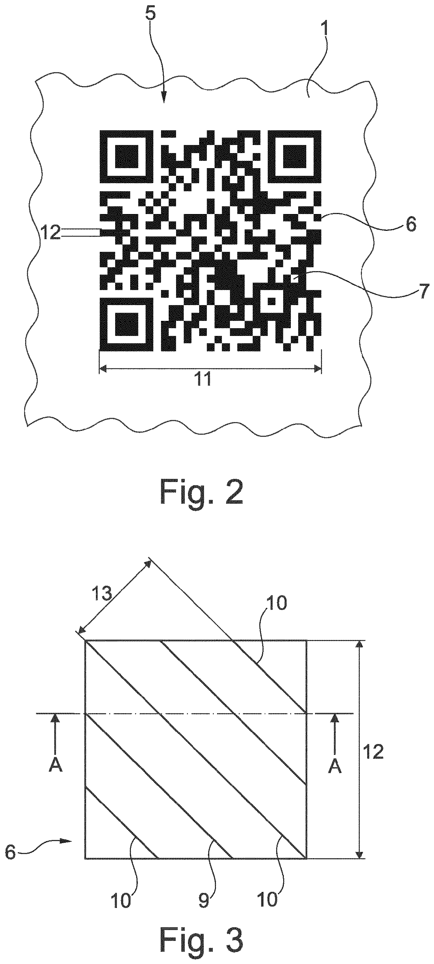

Die Figur 2 zeigt einen Ausschnitt einer Draufsicht auf eine Produktoberfläche 1 aufweisend einen Code 5, wobei es sich um einen QR-Code handelt. Der Code 5 weist Zellen 6 einer ersten Zellenart und Zellen 7 einer zweiten Zellenart auf, welche integraler Bestandteil der Produktoberfläche 1 sind. Die Zellen 6 der ersten Zellenart weisen ein Oberflächenprofil 3 mit Vertiefungen relativ zur Produktoberfläche 1 auf. Das Oberflächenprofil 3 der Zellen 6 unterscheidet sich in seinen Reflexionseigenschaften vom Oberflächenprofil 3 der Zellen 7 der zweiten Zellenart. Der Code 5 ist quadratisch mit einer Kantenlänge 11 von 2 cm und nimmt somit eine Fläche von 4 cm² auf der Produktoberfläche 1 ein. Die Zellen 6, 7 sind quadratisch mit einer Kantenlänge 12 von ca. 0,69 mm.

Bevorzugt handelt es sich bei der Produktoberfläche 1 um die Oberfläche einer Seitenwand eines Fahrzeugluftreifens.

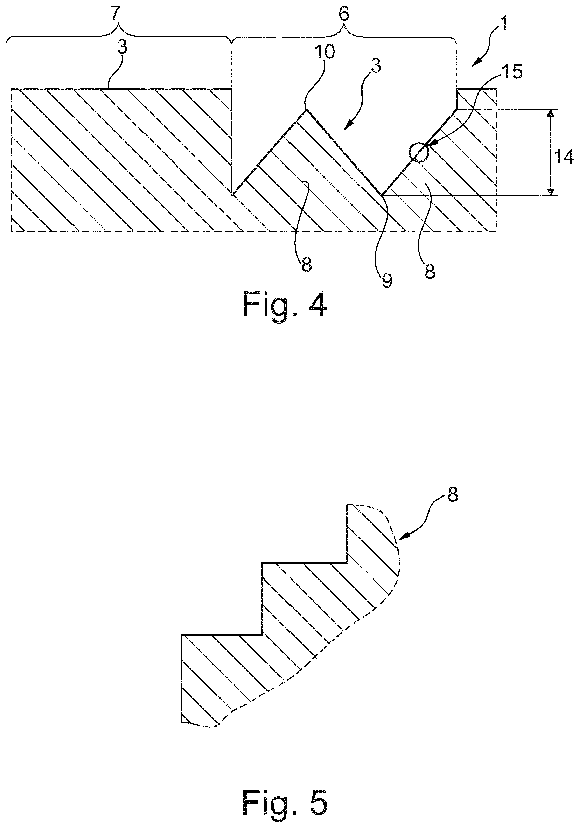

Die Figur 3 zeigt eine Draufsicht auf eine Zelle 6 einer ersten Zellenart eines Codes 5, beispielsweise der Zelle 6 des in Figur 2 gezeigten QR-Codes 5. In Zusammenschau mit der Figur 4 erkennt man, dass das Oberflächenprofil 3 der Zelle 6 Elemente 8 aufweist, welche eine Struktur bilden. Die Struktur ist eine Schraffur mit regelmäßig angeordneten Stegen mit dreieckigem Querschnitt als Elemente 8. Der Abstand 13 der Elementgründe 9 bzw. der Elementspitzen 10 beträgt 0,24 mm.

Die Figur 4 zeigt einen Querschnitt entlang der Linie A-A durch die in Figur 3 dargestellte Zelle 6 der ersten Zellenart sowie durch eine daran angrenzende Zelle 7 einer zweiten Zellenart des Codes 5, beispielsweise durch eine daran angrenzende Zelle 7 der zweiten in Figur 2 gezeigten Zellenart. Das Oberflächenprofil 3 der Zelle 6 weist mit einer Höhendifferenz 14 von 0,2 mm zwischen den Elementgründen 9 und den Elementspitzen 10 eine Rautiefe von 0,2 mm auf. Die Oberfläche der Zelle 6 ist durch ein zusätzliches Höhenprofil relativ zur Produktoberfläche 1 so abgesenkt, dass die Elementspitzen 10 das Niveau der Produktoberfläche 1 um 0,05 mm unterschreiten. Das Oberflächenprofil 3 der Zelle 7 der zweiten Zellenart weist eine Rautiefe von 0,008 mm gemäß DIN EN ISO 4287:1998 auf. Die Rautiefe des Oberflächenprofils 3 der Zelle 6 der ersten Zellenart ist somit um einen Faktor 25 größer als die Rautiefe des Oberflächenprofils 3 der Zelle 7 der zweiten Zellenart.

Ein Ausschnitt 15 des Elementes 8 aus Figur 4 ist in Figur 5 zu sehen. Die Oberfläche des Elementes 8 weist eine Treppenstruktur mit einer Stufenhöhe von 0,02 mm auf.

Die Reflexionseigenschaften des in den Figuren 3 bis 5 dargestellten Oberflächenprofils 3 der Zelle 6 unterscheiden sich deutlich von den Reflexionseigenschaften des in Figur 4 dargestellten Oberflächenprofils der Zelle 7. Das Oberflächenprofil 3 der Zelle 6 ist so gestaltet, dass es mehr Licht absorbiert als das Oberflächenprofil 3 der Zelle 7. Das Oberflächenprofil 3 der Zelle 7 reflektiert mehr Licht in einen Raumwinkel von 0,0955 sr innerhalb des Arbeitswinkels. Die Zellen 6,7 können mit einem optoelektronischen Lesegerät detektiert und unterschieden werden. Ein Code, der zwei solche Zellenarten aufweist, ist somit durch ein optoelektronisches Lesegerät lesbar.

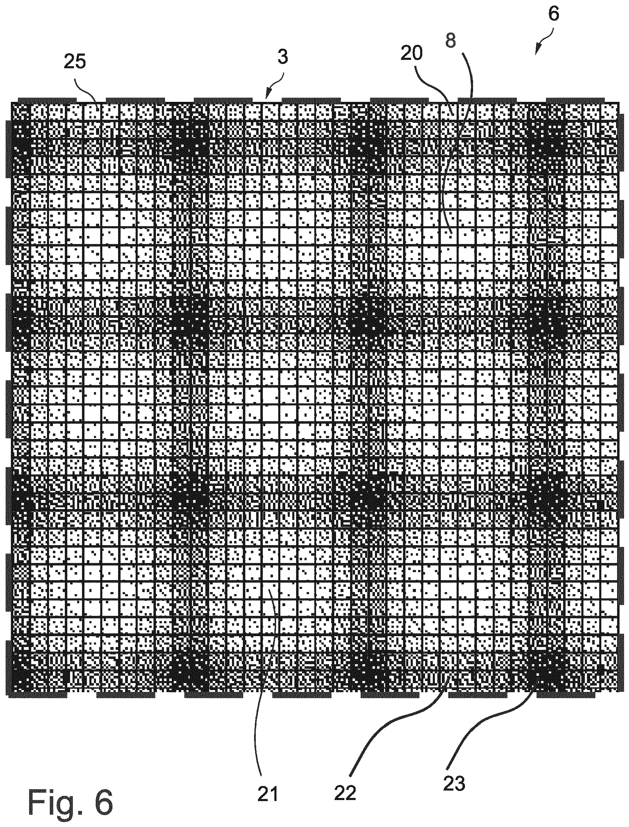

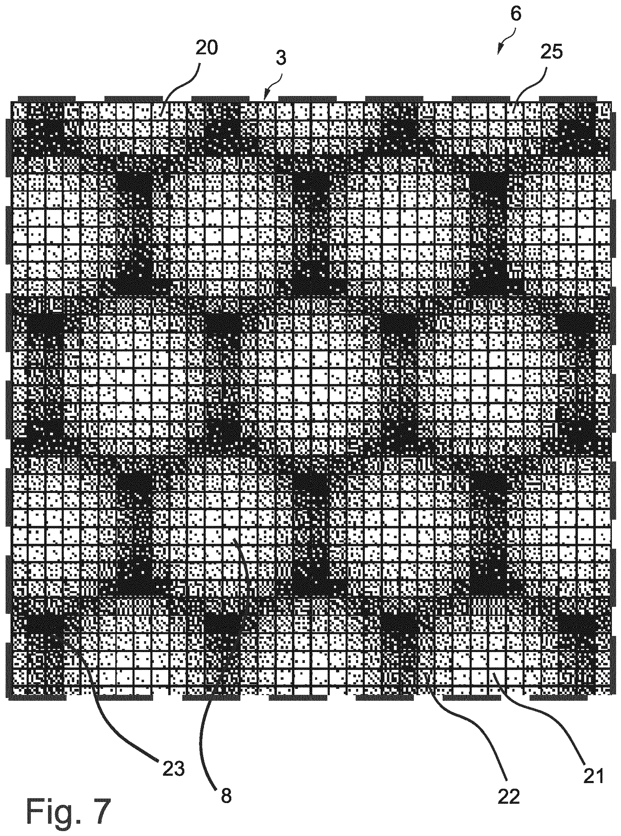

Die Figuren 6 bis 9 zeigen jeweils eine Draufsicht auf weitere Ausführungsbeispiele einer Zelle 6. Das Oberflächenprofil 3 jeder Zelle 6 ist dabei als Graustufenbild dargestellt. Die Oberflächenprofile 3 der Zellen 6 weisen eine höhere Absorption als das in Figur 4 gezeigte Oberflächenprofil 3 der Zelle 7 auf und reflektieren in einen Raumwinkel von 0,0955 sr innerhalb des Arbeitswinkels weniger Licht als das Oberflächenprofil 3 der in Figur 4 gezeigten Zelle 7. Ein Code, der eine erste Zellenart mit einem der in Figur 6 bis 9 dargestellten Oberflächenprofile 3 sowie eine zweite Zellenart mit dem in Figur 4 gezeigten Oberflächenprofil 3 der Zelle 7 aufweist, kann durch ein optoelektronisches Lesegerät gelesen werden. Ein Vergleich dieser Kombinationen hat gezeigt, dass ein Code, dessen erste Zellenart das in Figur 7 gezeigte Oberflächenprofil 3 und dessen zweite Zellenart das Oberflächenprofil der in Fig. 4 gezeigten Zelle 7 aufweist, zum besten Detektionsergebnis führt.

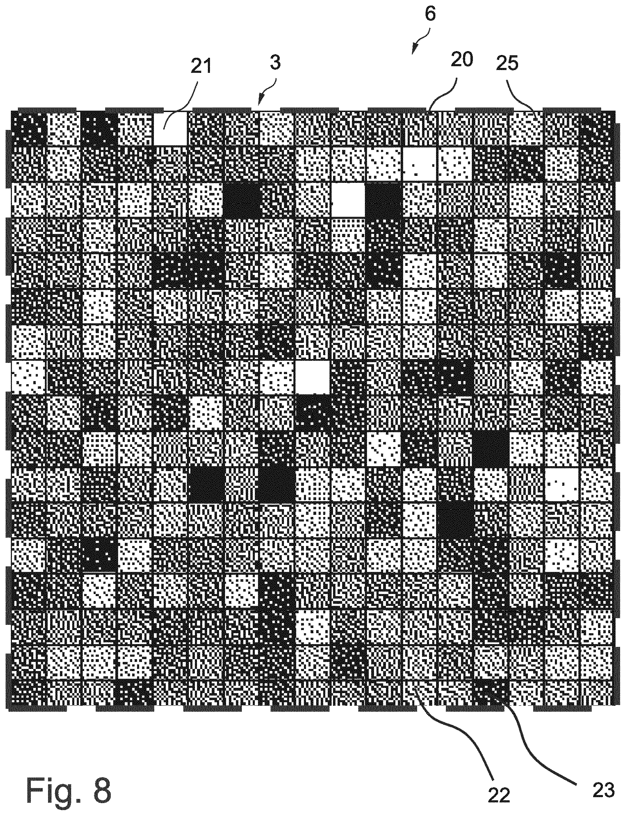

Die Höhe der Erhebungen und/oder Vertiefungen des Oberflächenprofils 3 sind im Graustufenbild durch 256 Graustufen dargestellt. Schwarz stellt den tiefsten Punkt, weiß den höchsten Punkt des Oberflächenprofils 3 dar. Der Höhenunterschied beträgt dabei 0,2 mm. Durch die diskrete Höhenabstufung gemäß der diskreten Graustufenwerte weisen die Elemente 8 der Oberflächenprofile 3 eine Treppenstruktur auf. Ein solches Oberflächenprofil 3 bzw. das hierzu komplementär ausgebildete Oberflächenprofil eines Formwerkzeuges zur Herstellung eines solchen Oberflächenprofiles 3 auf einer Produktoberfläche 1 kann beispielsweise durch Lasergravur erzeugt werden. In Figur 6, 7 und 9 beträgt die Kantenlänge eines jeden Pixels 20 0,02 mm, in Figur 8 beträgt die Kantenlänge eines jeden Pixels 20 0,04 mm.

Jedes Pixel 20 hat somit eine konstante Höhe, welche durch die Graustufe repräsentiert ist. Die Graustufe eines jeden Pixels 20 ist dabei durch die kumulierte Fläche der schwarzen Felder 25 innerhalb des Pixels 20 dargestellt. Die Felder 25 sind insbesondere Rechtecke. Beispielsweise ist deutlich erkennbar, dass jeweils das Pixel 21 eine deutlich geringere kumulierte Fläche der Felder 25 aufweist als das Pixel 22. Dem Pixel 21 ist somit eine geringere (hellere) Graustufe zuzuweisen als dem Pixel 22. Das Pixel 21 weist im Oberflächenprofil 3 somit eine größere Höhe auf als das Pixel 22. Weiter weist in den Figuren 6 bis 9 jeweils das Pixel 23 eine deutlich größere kumulierte Fläche der Felder 25 als das Pixel 22 auf. Dem Pixel 23 ist somit eine höhere (dunklere) Graustufe zuzuweisen als dem Pixel 22. Das Pixel 23 weist somit im Oberflächenprofil 3 eine geringere Höhe auf als das Pixel 22. Dem Pixel 20 mit der geringsten kumulierten Fläche der Felder 25 ist die Graustufe weiß zugeordnet, dem Pixel 20 mit der größten kumulierten Fläche der Felder 25 ist die Graustufe schwarz zugeordnet.

Das in Figur 6 als Graustufenbild dargestellte Oberflächenprofil 3 weist eine Struktur auf, deren Elemente 8 in einem rechtwinkligen Gitter angeordnet sind.

Das in Figur 7 als Graustufenbild dargestellte Oberflächenprofil 3 weist eine Struktur mit versetzt angeordneten Elementen 8 auf.

Das in Figur 8 als Graustufenbild dargestellte Oberflächenprofil 3 weist eine Textur auf, wobei die Höhe der Pixel 20 statistisch verteilt ist.

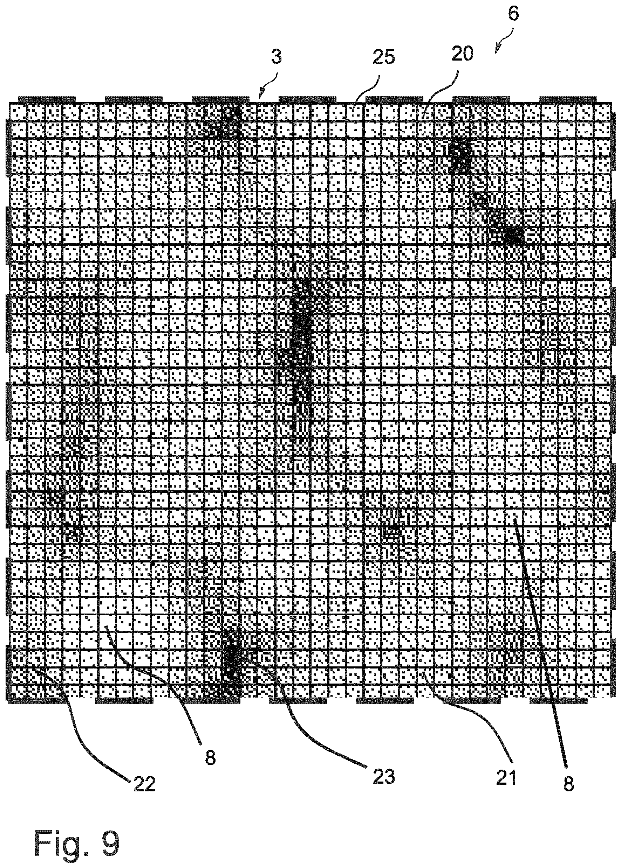

Das in Figur 9 als Graustufenbild dargestellte Oberflächenprofil 3 weist eine Textur auf, wobei Form und Verteilung der Elemente 8 unregelmäßig ist.

### Bezugszeichen

### (Teil der Beschreibung)

- 1: Produktoberfläche
- 2: einfallendes Licht
- 3: Oberflächenprofil
- 41: absorbiertes Licht
- 4: reflektiertes Licht
- 5: Code
- 6: Zelle einer Zellenart
- 7: Zelle einer Zellenart
- 8: Element
- 9: Elementgrund
- 10: Elementspitze
- 11: Kantenlänge eines Codes
- 12: Kantenlänge einer Zelle
- 13: Abstand
- 14: Höhendifferenz
- 15: Ausschnitt
- 16: Detektor
- 17: Seitenwand eines Fahrzeugluftreifens
- 20: Pixel
- 21, 22, 23: Pixel
- 25: Feld

## Patentansprüche

1. Produktoberfläche (1) aufweisend einen optoelektronisch lesbaren Code (5), welcher durch eine Anordnung flächiger Zellen (6,7) unterschiedlicher Zellenarten gebildet ist,
- wobei die Zellen (6,7) integraler Bestandteil der Produktoberfläche (1) sind,
- wobei die Zellen (6,7) einer jeden Zellenart jeweils ein Oberflächenprofil (3) aufweisen,
- wobei das Oberflächenprofil (3) mindestens einer Zellenart mindestens eine Erhebung und/oder Vertiefung relativ zur Produktoberfläche (1) aufweist und
- wobei das Oberflächenprofil (3) einer ersten Zellenart relativ zum Oberflächenprofil (3) einer zweiten Zellenart so ausgebildet ist, dass sich die Reflexionseigenschaften des Oberflächenprofils (3) der ersten Zellenart von den Reflexionseigenschaften des Oberflächenprofils (3) der zweiten Zellenart unterscheiden,
**dadurch gekennzeichnet, dass**
- sich die Oberflächenprofile (3) der Zellenarten eines Codes (5) in ihrer Rautiefe unterscheiden, und dass das Verhältnis der Rautiefe des Oberflächenprofils (3) einer ersten Zellenart zur Rautiefe des Oberflächenprofils (3) einer zweiten Zellenart mindestens 20 beträgt.

2. Produktoberfläche (1) nach Anspruch 1, **dadurch gekennzeichnet, dass** der Code (5) aus Zellen (6,7) zweier Zellenarten gebildet ist.

3. Produktoberfläche (1) nach wenigstens einem der vorangegangenen Ansprüche, **dadurch gekennzeichnet, dass** das Oberflächenprofil (3) der ersten Zellenart relativ zum Oberflächenprofil (3) einer zweiten Zellenart Licht stärker absorbiert.

4. Produktoberfläche (1) nach wenigstens einem der vorangegangenen Ansprüche, **dadurch gekennzeichnet, dass** das Oberflächenprofil (3) einer ersten Zellenart relativ zum Oberflächenprofil (3) einer zweiten Zellenart weniger Licht in einen Detektionsraumwinkel von 0,0955 sr (Steradiant) reflektiert.

5. Produktoberfläche (1) nach wenigstens einem der vorangegangenen Ansprüche, **dadurch gekennzeichnet, dass** das Oberflächenprofil (3) einer Zellenart Elemente (8) aufweist, die eine Struktur und/oder eine Textur bilden.

6. Produktoberfläche (1) nach Anspruch 5, **dadurch gekennzeichnet, dass** der Form eines Elementes (8) ein Stege und/oder ein Zylinder und/oder eine Pyramide und/oder ein Kegel und/oder ein Pyramidenstumpf und/oder ein Kegelstumpf zugrunde liegt.

7. Produktoberfläche (1) nach wenigstens einem der Ansprüche 5 oder 6, **dadurch gekennzeichnet, dass** die Oberfläche der Elemente (8) Erhebungen und/oder Vertiefungen, insbesondere eine Treppenstruktur, aufweist.

8. Produktoberfläche (1) nach wenigstens einem der Ansprüche 5 bis 7, **dadurch gekennzeichnet, dass** die Elementspitzen (10) zweier benachbarter Elemente (8) einen Abstand von 0,01 mm bis 0,8 mm, besonders bevorzugt einen Abstand von 0,06 mm bis 0,3 mm, aufweisen.

9. Produktoberfläche (1) nach wenigstens einem der Ansprüche 5 bis 8, **dadurch gekennzeichnet, dass** Elemente (8) eines Oberflächenprofils (3) einer Zellenart eine Höhendifferenz (14) von 0,08 mm bis 0,5 mm, besonders bevorzugt eine Höhendifferenz (14) von 0,15 mm bis 0,3 mm, aufweisen.

10. Produktoberfläche (1) nach wenigstens einem der vorangegangenen Ansprüche, **dadurch gekennzeichnet, dass** das Oberflächenprofil (3) einer Zellenart Bereiche mit einer Rautiefe von maximal 0,01 mm, bevorzugt einer Rautiefe von maximal 0,08 mm, aufweist.

11. Produktoberfläche (1) nach wenigstens einem der vorangegangenen Ansprüche, **dadurch gekennzeichnet, dass** das Oberflächenprofil (3) einer Zellenart einem Oberflächenprofil (3) der Produktoberfläche (1) entspricht.

12. Produktoberfläche (1) nach wenigstens einem der vorangegangenen Ansprüche, **dadurch gekennzeichnet, dass** Zellen (6,7) ein zusätzliches Höhenprofil aufweisen.

13. Produktoberfläche (1) nach wenigstens einem der vorangegangenen Ansprüche, **dadurch gekennzeichnet, dass** der Code (5) ein eindimensionaler Code, insbesondere ein StrichCode, oder ein zweidimensionaler Code, insbesondere ein quick-response- (QR-) Code, ist.

14. Produktoberfläche (1) nach wenigstens einem der vorangegangenen Ansprüche, **dadurch gekennzeichnet, dass** die Produktoberfläche (1) aus einem polymeren Material, insbesondere aus einem elastomeren Material, gebildet ist.

15. Verwendung einer Produktoberfläche (1) nach wenigstens einem der Ansprüche 1 bis 14 auf der Seitenwand (17) eines Fahrzeugluftreifens.

16. Verwendung einer Produktoberfläche (1) nach wenigstens einem der Ansprüche 1 bis 14 auf einem Förderband.

17. Verfahren zur Herstellung einer Produktoberfläche (1) nach wenigstens einem der Ansprüche 1 bis 14, **dadurch gekennzeichnet, dass** zur Herstellung des Produktes ein Formwerkzeug eingesetzt wird und dass der Code (5) bei der Herstellung des Produktes durch eine entsprechend ausgestaltete Formfläche des Formwerkzeuges formgebend in Produktoberfläche (1) geprägt wird.

18. Verfahren zur Herstellung einer Produktoberfläche (1) nach wenigstens einem der Ansprüche 1 bis 14, **dadurch gekennzeichnet, dass** das Formwerkzeug zur Herstellung des Produktes mit einer Aussparung versehen ist, in die ein der Aussparung komplementär ausgebildeter Wechselstempel auswechselbar anzuordnen ist, wobei der Wechselstempel eine Formfläche aufweist, durch welche der Code (5) auf die Produktoberfläche (1) übertragbar ist.

## Claims

1. Product surface (1) having an optoelectronically readable code (5), which is formed by an arrangement of flat cells (6, 7) of different cell types,
- the cells (6, 7) being an integral component of the product surface (1),
- the cells (6, 7) of each cell type each having a surface profile (3),
- the surface profile (3) of at least one cell type having at least one elevation and/or depression relative to the product surface (1), and
- the surface profile (3) of a first cell type being formed relative to the surface profile (3) of a second cell type such that the reflective properties of the surface profile (3) of the first cell type differ from the reflective properties of the surface profile (3) of the second cell type,
**characterized in that**
- the surface profiles (3) of the cell types of a code (5) differ in their surface roughness, and **in that** the ratio of the surface roughness of the surface profile (3) of a first cell type relative to the surface roughness of the surface profile (3) of a second cell type is at least 20.

2. Product surface (1) according to Claim 1, **characterized in that** the code (5) is formed from cells (6, 7) of two cell types.

3. Product surface (1) according to at least one of the preceding claims, **characterized in that** the surface profile (3) of the first cell type absorbs light more highly relative to the surface profile (3) of a second cell type.

4. Product surface (1) according to at least one of the preceding claims, **characterized in that** the surface profile (3) of a first cell type reflects less light in a detection space angle of 0.0955 sr (steradian) relative to the surface profile (3) of a second cell type.

5. Product surface (1) according to at least one of the preceding claims, **characterized in that** the surface profile (3) of a cell type has elements (8) which form a structure and/or a texture.

6. Product surface (1) according to Claim 5, **characterized in that** the shape of an element (8) is based on a web and/or a cylinder and/or a pyramid and/or a cone and/or a truncated pyramid and/or a truncated cone.

7. Product surface (1) according to at least one of Claims 5 and 6, **characterized in that** the surface of the elements (8) has elevations and/or depressions, in particular a staircase structure.

8. Product surface (1) according to at least one of Claims 5 to 7, **characterized in that** the element tips (10) of two adjacent elements (8) have a spacing of 0.01 mm to 0.8 mm, particularly preferably a spacing of 0.06 mm to 0.3 mm.

9. Product surface (1) according to at least one of Claims 5 to 8, **characterized in that** elements (8) of a surface profile (3) of a cell type have a height difference (14) of 0.08 mm to 0.5 mm, particularly preferably a height difference (14) of 0.15 mm to 0.3 mm.

10. Product surface (1) according to at least one of the preceding claims, **characterized in that** the surface profile (3) of a cell type has regions with a surface roughness of at most 0.01 mm, preferably a surface roughness of at most 0.08 mm.

11. Product surface (1) according to at least one of the preceding claims, **characterized in that** the surface profile (3) of a cell type corresponds to a surface profile (3) of the product surface (1).

12. Product surface (1) according to at least one of the preceding claims, **characterized in that** the cells (6, 7) have an additional height profile.

13. Product surface (1) according to at least one of the preceding claims, **characterized in that** the code (5) is a one-dimensional code, in particular a bar code, or a two-dimensional code, in particular a quick-response (QR) code.

14. Product surface (1) according to at least one of the preceding claims, **characterized in that** the product surface (1) is formed of a polymer material, in particular of an elastomer material.

15. Use of a product surface (1) according to at least one of Claims 1 to 14 on the side wall (17) of a vehicle pneumatic tyre.

16. Use of a product surface (1) according to at least one of Claims 1 to 14 on a conveyor belt.

17. Method for producing a product surface (1) according to at least one of Claims 1 to 14, **characterized in that** in order to produce the product, a mould is used, and **in that** during the production of the product, the code (5) is embossed in a shaping manner in the product surface (1) by an appropriately configured moulding surface of the mould.

18. Method for producing a product surface (1) according to at least one of Claims 1 to 14, **characterized in that** the mould for producing the product is provided with a recess, in which an exchange punch formed so as to be complementary to the recess is to be arranged interchangeably, wherein the exchange punch has a moulding surface by means of which the code (5) can be transferred to the product surface (1).

## Revendications

1. Surface (1) de produit, la surface présentant un code (5) lisible par voie optoélectronique formé par un agencement de cellules plates (6, 7) de différents types,
- les cellules (6, 7) faisant partie intégrante de la surface (1) du produit,
- les cellules (6, 7) de chaque type de surface présentant chacune un profil de surface (3),
- le profil de surface (3) d'au moins un type de cellule présentant au moins une saillie et/ou un creux par rapport à la surface (1) du produit et
- le profil de surface (3) d'un premier type de cellule étant configuré par rapport au profil de surface (3) d'un deuxième type de cellule surface (1) du produit les propriétés de réflexion du profil de surface (3) du premier type de cellule soient différentes des propriétés de réflexion du profil de surface (3) du deuxième type de cellule,
**caractérisé en ce que**
- les profils de surface (3) des types de cellule d'un code (5) diffèrent par la profondeur de leur rugosité et
- **en ce que** le rapport entre la profondeur de rugosité du profil de surface (3) d'un premier type de cellule et la profondeur de rugosité du profil de surface (3) d'un deuxième type de cellule est d'au moins 20.

2. Surface (1) de produit selon la revendication 1, **caractérisé en ce que** le code (5) est formé de cellules (6, 7) du deuxième type de cellule.

3. Surface (1) de produit selon au moins l'une des revendications précédentes, **caractérisé en ce que** le profil de surface (3) du premier type de cellule absorbe davantage la lumière que le profil de surface (3) d'un deuxième type de cellule.

4. Surface (1) de produit selon au moins l'une des revendications précédentes, **caractérisé en ce qu'**à l'intérieur d'un angle spatial de détection de 0,0955 sr (stéradian), le profil de surface (3) du premier type de cellule réfléchit moins la lumière que le profil de surface (3) d'un deuxième type de cellule.

5. Surface (1) de produit selon au moins l'une des revendications précédentes, **caractérisé en ce que** le profil de surface (3) d'un type de cellule présente des éléments qui forment une structure et/ou une texture.

6. Surface (1) de produit selon la revendication 5, **caractérisé en ce que** la forme d'un élément (8) est basée sur celle d'une nervure, d'un cylindre, d'une pyramide, d'un cône, d'un tronc de pyramide et/ou d'un tronc de cône.

7. Surface (1) de produit selon au moins l'une des revendications 5 ou 6, **caractérisé en ce que** la surface des éléments (8) présente des saillies et/ou des creux, en particulier une structure en gradins.

8. Surface (1) de produit selon au moins l'une des revendications 5 à 7, **caractérisé en ce que** les sommets (10) de deux éléments (8) voisins présentent un écart de 0,01 mm à 0,8 mm et de façon particulièrement préférable un écart de 0,06 mm à 0,3 mm.

9. Surface (1) de produit selon au moins l'une des revendications 5 à 8, **caractérisé en ce que** les éléments (8) d'un profil de surface (3) d'un type de cellule présentent une différence de hauteur (14) de 0,08 mm à 0,5 mm et de façon particulièrement préférable une différence de hauteur (14) de 0,15 mm à 0,3 mm.

10. Surface (1) de produit selon au moins l'une des revendications précédentes, **caractérisé en ce que** le profil de surface (3) d'un type de cellule présente des parties dont la rugosité de surface est d'au plus 0,01 mm et de façon particulièrement préférable la rugosité de surface est d'au plus 0,08 mm.

11. Surface (1) de produit selon au moins l'une des revendications précédentes, **caractérisé en ce que** le profil de surface (3) d'un type de cellule correspond au profil de surface (3) de la surface (1) du produit.

12. Surface (1) de produit selon au moins l'une des revendications précédentes, **caractérisé en ce que** des cellules (6, 7) présentent un profil de hauteur supplémentaire.

13. Surface (1) de produit selon au moins l'une des revendications précédentes, **caractérisé en ce que** le code (5) est un code unidimensionnel, en particulier un code à barrer, ou un code bidimensionnel, en particulier un code QR ("Quick Response Code" - code à réponse rapide).

14. Surface (1) de produit selon au moins l'une des revendications précédentes, **caractérisé en ce que** la surface (1) du produit est formée d'un matériau polymère, en particulier d'un matériau élastomère.

15. Utilisation d'une surface (1) du produit selon au moins l'une des revendications 1 à 14 sur la paroi latérale (17) d'un bandage pneumatique de roue de véhicule.

16. Utilisation d'une surface (1) du produit selon au moins l'une des revendications 1 à 14 sur une bande transporteuse.

17. Procédé de réalisation due surface (1) du produit selon au moins l'une des revendications 1 à 14, **caractérisé en ce que** un outil de façonnage est utilisé pour réaliser le produit et **en ce que** lors de la réalisation du produit, le code (5) est imprimé dans la surface (1) du produit en donnant à l'outil de façonnage une surface de forme appropriée.

18. Procédé de réalisation due surface (1) du produit selon au moins l'une des revendications 1 à 14, **caractérisé en ce que** l'outil de façonnage utilisé pour réaliser le produit est doté d'une découpe dans laquelle un tampon remplaçable de forme complémentaire à celle de la découpe doit être placé de manière remplaçable, le tampon remplaçable présentant une surface façonnée par laquelle le code (5) peut être transféré sur la surface (1) du produit.
